# EUROPEAN PATENT APPLICATION

(11) **EP 4 474 189 A1**
(43) Date of publication of application: **11.12.2024**
(21) Application number: 23815240.9
(22) Date of filing: 31.05.2023
(51) Int. Cl.: B60K 6/38

(54) **HYBRID POWER ASSEMBLY AND VEHICLE**

(30) Priority: 31.05.2022 CN 202221383164 U
(71) Applicant: BYD Company Limited, Shenzhen, Guangdong 518118 (CN)
(72) Inventor: ZHANG, Feng, Shenzhen, Guangdong 518118 (CN); LIAO, Yinsheng, Shenzhen, Guangdong 518118 (CN); ZHAO, Gaoming, Shenzhen, Guangdong 518118 (CN); ZHU, Yongtian, Shenzhen, Guangdong 518118 (CN); WANG, Qiang, Shenzhen, Guangdong 518118 (CN)
(74) Representative: Taor, Simon Edward William
(86) International application number: PCT/CN2023/097361
(87) International publication number: WO 2023/232062

(57) **Abstract**

A hybrid power assembly (1000) and a vehicle. The hybrid power assembly (1000) comprises a transmission member (11), a first clutch (15), a second clutch (16), a first motor (200), an engine (300), and a reversing portion (700). The first clutch (15) is in transmission connection with both an engine output shaft (301) and the transmission member (11). The second clutch (16) is connected between the transmission member (11) and the reversing portion (700). The reversing portion (700) is connected between the second clutch (16) and a first driving wheel (2000). The first motor (200) is in transmission connection with the transmission member (11). Reversing is performed by means of the reversing portion (700), so as to enable the rotation direction of the engine output shaft (301) to be the same as the rotation direction of the first driving wheel (2000).

## Description

### CROSS-REFERENCE TO RELATED APPLICATIONS

The present disclosure claims priority to Chinese Patent Application No. 202221383164.3, filed on May 31, 2022. The entire content of the above-referenced application is incorporated herein by reference.

### FIELD

The present disclosure relates to the field of vehicles, and in particular, to a hybrid powertrain and a vehicle with the hybrid powertrain.

### BACKGROUND

In a related art, a hybrid powertrain of an existing vehicle has a complex structure, and multiple electrical machines and multiple engines are usually required to implement a hybrid mode.

### SUMMARY

The present disclosure aims to resolve at least one of the technical problems existing in a related art. Therefore, an objective of the present disclosure is to provide a hybrid powertrain. The hybrid powertrain has a simple structure, and is easy to be arranged on a vehicle. In addition, a rotation direction of an engine output shaft is the same as a rotation direction of a first drive wheel, to implement driving of the vehicle to drive forward and ensure that the vehicle normally drives.

The present disclosure further provides a vehicle.

A hybrid powertrain in the present disclosure includes:
a drive member, a first clutch, a second clutch, a first electrical machine, an engine, and a reverse piece.

The first clutch is drivingly connected to both an engine output shaft of the engine and the drive member, to selectively connect the drive member and the engine output shaft.

The second clutch is connected between the drive member and the reverse piece, and the reverse piece is connected between the second clutch and a first drive wheel, to selectively connect the drive member and the first drive wheel.

The first electrical machine is drivingly connected to the drive member, so that the first electrical machine and the engine are configured to be selectively connected through the first clutch.

When the engine outputs power to the first drive wheel, reversing is performed by the reverse piece, so that a rotation direction of the engine output shaft is the same as a rotation direction of the first drive wheel.

According to the hybrid powertrain in the present disclosure, the hybrid powertrain has a simple structure, and is easy to be arranged and mounted. Therefore, production efficiency of the vehicle can be improved. In addition, when the engine is arranged on a right side of the first clutch and the second clutch, reversing is performed by the reverse piece, so that the rotation direction of the engine output shaft is the same as the rotation direction of the first drive wheel, to implement driving of the vehicle to drive forward and ensure that the vehicle normally drives. In addition, a hybrid mode can be implemented by the first electrical machine and the engine provided that the first clutch and the second clutch are properly used. A structure is simple, and costs are reduced in comparison with a case of multiple electrical machines.

In some examples of the present disclosure, the first clutch includes a first housing and a first driven member, a first clutch plate is arranged inside the first housing, the first clutch plate is selectively engaged with the first driven member, the first driven member is connected to the engine output shaft, and the first housing is connected to the drive member.

In some examples of the present disclosure, an intermediate gear is engaged between the first housing and the drive member.

In some examples of the present disclosure, a first electrical machine output shaft of the first electrical machine is fixedly connected to the intermediate gear, and the first electrical machine output shaft is coaxially arranged with the intermediate gear.

In some examples of the present disclosure, the second clutch includes a second housing and a second driven member, a second clutch plate is arranged inside the second housing, the second clutch plate is fixedly connected to the drive member, the second driven member is configured to be selectively engaged with the second housing, and the second driven member is drivingly connected to the reverse piece.

In some examples of the present disclosure, the reverse piece is drivingly connected to the first drive wheel through a first differential.

In some examples of the present disclosure, an output end of the first differential has a first gear, the second clutch is arranged with a first output gear, the reverse piece is a reverse gear, and the reverse gear is engaged between the first output gear and the first gear.

In some examples of the present disclosure, a central axis of the first gear, a central axis of the reverse gear, and a central axis of the first output gear are parallel, and a projection of the central axis of the first gear, a projection of the central axis of the reverse gear, and a projection line of the central axis of the first output gear are connected to form a triangle in an axial direction of the first gear.

In some examples of the present disclosure, the second housing and the drive member are integrally formed.

In some examples of the present disclosure, the hybrid powertrain further includes a support shaft, the drive member is connected to the support shaft and is coaxially arranged with the support shaft, and the second driven member is rotatably sleeved on the support shaft.

In some examples of the present disclosure, the engine output shaft is coaxially arranged with the support shaft, and the first driven member is rotatably connected to the support shaft.

In some examples of the present disclosure, the first housing and the drive member are fixedly connected or integrally formed.

In some examples of the present disclosure, an energy storage unit is further included. The energy storage unit is electrically connected to the first electrical machine.

In some examples of the present disclosure, the hybrid powertrain further includes:
a second electrical machine; and
a transmission, the transmission being connected between the second electrical machine and a second differential, and the second electrical machine outputting power to a second drive wheel through the transmission.

A vehicle in the present disclosure includes the foregoing hybrid powertrain.

Additional aspects and advantages of the present disclosure are partially given in the following description and are partially become clear from the following description, or may be learned of from practices of the present disclosure.

### BRIEF DESCRIPTION OF THE DRAWINGS

FIG. 1 is a schematic diagram of a hybrid powertrain according to an embodiment of the present disclosure;
FIG. 2 is an enlarged view of a part A in FIG. 1;
FIG. 3 is a schematic diagram in which a first gear, a reverse gear, and a first output gear are matched according to an embodiment of the present disclosure;
FIG. 4 is a schematic diagram of another embodiment of a hybrid powertrain according to an embodiment of the present disclosure; and
FIG. 5 is a schematic diagram of a vehicle according to an embodiment of the present disclosure.

### DETAILED DESCRIPTION

Embodiments of the present disclosure are described in detail below, and examples of the embodiments are shown in accompanying drawings. Same or similar elements or elements having same or similar functions are denoted by same or similar reference numerals throughout the description. The embodiments described below with reference to the accompanying drawings are examples and used only for explaining the present disclosure, and should not be construed as a limitation on the present disclosure.

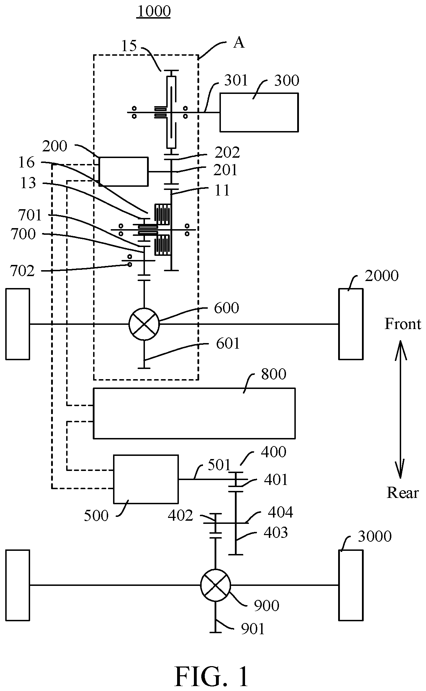

With reference to FIG. 1 to FIG. 5, the following describes a hybrid powertrain 1000 in an embodiment of the present disclosure. The hybrid powertrain 1000 may be mounted on a vehicle 4000.

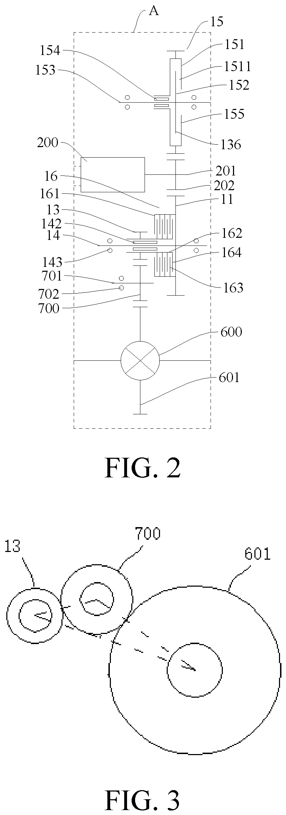

As shown in FIG. 1 and FIG. 2, the hybrid powertrain 1000 in this embodiment of the present disclosure includes a drive member 11, a first clutch 15, a second clutch 16, a first electrical machine 200, an engine 300, and a reverse piece 700. The first clutch 15 is drivingly connected to both an engine output shaft 301 of the engine 300 and the drive member 11. The first clutch 15 may be selectively connected to the drive member 11 and the engine output shaft 301. It should be noted that the first clutch 15 is connected between the engine output shaft 301 of the engine 300 and the drive member 11. When the first clutch 15 is engaged, the drive member 11 is connected to the engine output shaft 301, and power may be transmitted between the drive member 11 and the engine 300. When the first clutch 15 is disconnected, the drive member 11 is disconnected from the engine output shaft 301, and power cannot be transmitted between the drive member 11 and the engine 300.

The second clutch 16 is connected between the drive member 11 and the reverse piece 700, and the reverse piece 700 is connected between the second clutch 16 and a first drive wheel 2000, to selectively connect the drive member 11 and the first drive wheel 2000. The first drive wheel 2000 may be a front wheel or a rear wheel of the vehicle 4000. In the present disclosure, that the first drive wheel 2000 is a front wheel of the vehicle 4000 is used as an example for description. It should be noted that the second clutch 16 is drivingly connected to the first drive wheel 2000 through the reverse piece 700, and the second clutch 16 is engaged or disconnected to selectively connect the drive member 11 and the first drive wheel 2000. Specifically, when the second clutch 16 is engaged, the drive member 11 is drivingly connected to the first drive wheel 2000, and power of the drive member 11 may be transmitted to the first drive wheel 2000, to drive the vehicle 4000 to drive. When the second clutch 16 is disconnected, the drive member 11 is not connected to the first drive wheel 2000, and power of the drive member 11 cannot be transmitted to the first drive wheel 2000. In an embodiment, torque of the first clutch 15 may be greater than torque of the second clutch 16.

The first electrical machine 200 is drivingly connected to the drive member 11, to selectively connect the first electrical machine 200 and the engine 300 through the first clutch 15. It should be explained that when the first clutch 15 is engaged, the first electrical machine 200 is connected to the engine 300, and power may be transmitted between the first electrical machine 200 and the engine 300. When the first clutch 15 is disconnected, the first electrical machine 200 is disconnected from the engine 300, and power cannot be transmitted between the first electrical machine 200 and the engine 300. At least one of the first electrical machine 200 and the engine 300 selectively outputs power to the first drive wheel 2000 through the second clutch 16. To be specific, the first electrical machine 200 may selectively output power to the first drive wheel 2000 through the second clutch 16, and the engine 300 may selectively output power to the second clutch 16 through the first clutch 15 and the second clutch 16. When both the first clutch 15 and the second clutch 16 are in an engaged state, the first electrical machine 200 and the engine 300 may simultaneously selectively output power to the first drive wheel 2000 through the second clutch 16. After the power is output to the first drive wheel 2000, the first drive wheel 2000 may rotate, so that the vehicle 4000 drives.

The engine 300 may selectively output power to the first electrical machine 200 through the first clutch 15, to drive the first electrical machine 200 to generate power. It may also be understood that the engine 300 may output power to the first electrical machine 200 through the first clutch 15, or the engine 300 may not output power to the first electrical machine 200. When the engine 300 outputs power to the first electrical machine 200 through the first clutch 15, the engine 300 may drive the first electrical machine 200 to generate power. In an embodiment, the first electrical machine 200 may selectively output power to the engine 300 through the first clutch 15, to drive the engine 300 to start ignition.

It should be noted that the drive member 11, the first clutch 15, the second clutch 16, the first electrical machine 200, and the engine 300 are matched to work, to output power to the first drive wheel 2000. Working states of the first electrical machine 200, the engine 300, the first clutch 15, and the second clutch 16 are switched, the vehicle 4000 can be switched to different driving modes, to improve driving performance of the vehicle 4000. In addition, a structure of the hybrid powertrain 1000 can be simplified, and the hybrid powertrain 1000 has a compact structure. The first clutch 15 is engaged or disconnected, so that the engine 300 selectively outputs power to the first electrical machine 200 and the drive member 11. Specifically, when the first clutch 15 is engaged, the engine 300 may output power to the first electrical machine 200 and the drive member 11. When the first clutch 15 is disconnected, the engine 300 cannot output power to the first electrical machine 200 and the drive member 11, so that the engine 300 selectively outputs power to the first electrical machine 200 and the drive member 11.

When the engine 300 outputs power to the first drive wheel 2000, reversing is performed by the reverse piece 700, so that a rotation direction of the engine output shaft 301 is the same as a rotation direction of the first drive wheel 2000. In a related art, from a perspective of the engine output shaft, the rotation direction of the engine output shaft is counterclockwise rotation. As shown in FIG. 1, in a rear-to-front direction of the vehicle 4000, the engine 300 is arranged on a right side of the first clutch 15, and the second clutch 16 is drivingly connected to the first drive wheel 2000 through the reverse piece 700. Because the rotation direction of the engine output shaft 301 of the engine 300 is unchanged, when the engine 300 is arranged on the right side of the first clutch 15, if the reverse piece 700 is not arranged between the second clutch 16 and the first drive wheel 2000, when the engine 300 outputs power to the first drive wheel 2000, the rotation direction of the engine output shaft 301 is opposite to the rotation direction of the first drive wheel 2000, and when the power is output to the first drive wheel 2000, the first drive wheel 2000 rotates toward a rear side of the vehicle 4000, and the vehicle 4000 cannot drive forward. In the present disclosure, the second clutch 16 is drivingly connected to the first drive wheel 2000 through the reverse piece 700, and reversing is performed by the reverse piece 700. When the engine 300 outputs power to the first drive wheel 2000, the rotation direction of the engine output shaft 301 is the same as the rotation direction of the first drive wheel 2000, to help arrange the engine, so that the vehicle 4000 is driven to drive forward. It is ensured that the vehicle 4000 normally runs.

The hybrid powertrain 1000 is mounted on the vehicle 4000, to implement multiple functions of the vehicle 4000. Details are as follows:
Function of starting the engine 300 when the first electrical machine 200 is in a no-load state: In such a function state, neither the first electrical machine 200 nor the engine 300 outputs power to the first drive wheel 2000 through the second clutch 16. The first electrical machine 200 is in a still state at the start. After the first electrical machine 200 receives electrical energy, the first electrical machine 200 starts to run from the still state. The first clutch 15 is engaged, and the first electrical machine 200 transfers power to the engine 300, to drag the engine 300 to start ignition, and start the engine 300.

Function of starting the engine 300 when the first electrical machine 200 is in a loading state: In such a function state, the second clutch 16 is engaged, the first electrical machine 200 works, the first electrical machine 200 outputs power to the first drive wheel 2000 through the second clutch 16, the first electrical machine 200 is in a running with load state, and the first electrical machine 200 transfers power to the engine 300 through the first clutch 15, to drag the engine 300 to start ignition.

Series power generation function of the engine 300: In such a function state, the engine 300 has been in an ignited, running, and working state, the second clutch 16 is disconnected, neither the first electrical machine 200 nor the engine 300 outputs power to the first drive wheel 2000, the engine 300 outputs power to the first electrical machine 200 through the first clutch 15, the first electrical machine 200 runs to generate power and supply electrical energy to an energy storage unit 800 and/or an second electrical machine 500, and when the second electrical machine 500 works, the second electrical machine 500 may output power to the second drive wheel 3000. It should be noted that if the first drive wheel 2000 is a front wheel, the second drive wheel 3000 is a rear wheel. If the first drive wheel 2000 is a rear wheel, the second drive wheel 3000 is a front wheel. In the present disclosure, that the first drive wheel 2000 is a front wheel and the second drive wheel 3000 is a rear wheel is used as an example for description.

Parallel power generation function of the engine 300: In such a function state, the engine 300 is in an ignited, running, and working state, the engine 300 outputs power to the first drive wheel 2000 through the first clutch 15 and the second clutch 16, the engine 300 drives the vehicle 4000 to drive, the engine 300 outputs power to the first electrical machine 200 through the first clutch 15, to drag the first electrical machine 200 to rotate to drive the first electrical machine 200 to generate power; the first electrical machine 200 changes into a generator mode, and the engine 300 drives the first electrical machine 200 to generate power and supply electrical energy to an energy storage unit 800 or a second electrical machine 500.

Therefore, the hybrid powertrain 1000 in the present disclosure has a simple structure, and is easy to be arranged and mounted. Therefore, production efficiency of the vehicle 4000 can be improved. In addition, when the engine 300 is arranged on a right side of the first clutch 15 and the second clutch 16, reversing is performed by the reverse piece 700, so that the rotation direction of the engine output shaft 301 is the same as the rotation direction of the first drive wheel 2000, to implement driving of the vehicle 4000 to drive forward and ensure that the vehicle 4000 normally drives. In addition, a hybrid mode can be implemented by the first electrical machine 200 and the engine 300 provided that the first clutch 15 and the second clutch 16 are properly used. A structure is simple, and costs are reduced in comparison with a case of multiple electrical machines.

In some embodiments of the present disclosure, as shown in FIG. 1 and FIG. 2, the hybrid powertrain 1000 may further include a reserve shaft 701. The reverse piece 700 may be arranged as a reverse gear, the reverse piece 700 is mounted on the reserve shaft 701, and the reserve shaft 701 is mounted on a housing of the hybrid powertrain 1000 through a reverse bearing 702. In an embodiment, one end of the reserve shaft 701 is mounted on the housing of the hybrid powertrain 1000 through the reverse bearing 702, and the other end of the reserve shaft 701 is arranged to be suspended. In such arrangement, an axial size and a radial size of the hybrid powertrain 1000 can be effectively reduced.

In some embodiments of the present disclosure, as shown in FIG. 1 and FIG. 2, the first clutch 15 may include a first housing 151 and a first driven member 152, a first clutch plate 155 is arranged inside the first housing 151, the first clutch plate 155 is selectively engaged with the first driven member 152, the first driven member 152 is connected to the engine output shaft 301, and the first housing 151 is connected to the drive member 11. In an embodiment, the first housing 151 may be rotatably mounted on the housing of the hybrid powertrain 1000 through a mounting shaft 153, and the first housing 151 is sleeved outside the mounting shaft 153 and is rotatable relative to the mounting shaft 153. In an embodiment, a support bearing 154 is arranged between the mounting shaft 153 and the first housing 151. After the first driven member 152 moves relative to the first housing 151 and is engaged with the first housing 151, when the engine 300 works, power can be output to the drive member 11, or power can be output to the first electrical machine 200. When the first electrical machine 200 works, the first electrical machine 200 may output power to the engine 300.

In some embodiments of the present disclosure, as shown in FIG. 1 and FIG. 2, the first driven member 152 is connected to the engine output shaft 301. In an embodiment, the first driven member 152 is fixedly connected to the engine output shaft 301. A manner in which the first driven member 152 is fixedly connected to the engine output shaft 301 is not specifically limited. In an embodiment, multiple first friction plates 155 are arranged, the multiple first friction plates 155 are sequentially spaced apart, a first groove 1511 is formed between adjacent first friction plates 155, and the first driven member 152 is arranged with at least one second friction plate 156. For example, there are multiple second friction plates 156, the multiple second friction plates 156 are arranged in a one-to-one correspondence with multiple first grooves 1511, and the second friction plate 156 extends into the first groove 1511. The first driven member 152 moves relative to the first housing 151, so that the first friction plate 155 and the second friction plate 156 are engaged or disconnected, and the engine 300 selectively transfers power to the first electrical machine 200 and the drive member 11.

In some embodiments of the present disclosure, as shown in FIG. 1 and FIG. 2, an intermediate gear 202 is engaged between the first housing 151 and the drive member 11. The intermediate gear 202 is engaged between the first housing 151 and the drive member 11, so that power is transferred. It can be ensured that the first housing 151 and the drive member 11 transfer power stably. In this case, the first housing 151 is drivingly connected to the drive member 11.

In some embodiments of the present disclosure, as shown in FIG. 1 and FIG. 2, a first electrical machine output shaft 201 of the first electrical machine 200 is fixedly connected to the intermediate gear 202, and the first electrical machine output shaft 201 is coaxially arranged with the intermediate gear 202. The first electrical machine output shaft 201 is fixedly connected to the intermediate gear 202. After the first housing 151 is engaged with the first driven member 152, when the engine 300 works, when the first housing 151 rotates, the intermediate gear 202 is driven to rotate; and when the intermediate gear 202 rotates, the first electrical machine 200 generates power, and the drive member 11 is driven to rotate. In addition, the first electrical machine output shaft 201 is coaxially arranged with the intermediate gear 202, to prevent the intermediate gear 202 from eccentrically rotating, so that the intermediate gear 202 can be reliably engaged between the first housing 151 and the drive member 11, to ensure working performance of the hybrid powertrain 1000. In addition, when the first electrical machine 200 works, power of the first electrical machine output shaft 201 may be transferred to the drive member 11 through the intermediate gear 202. After the first clutch 15 is engaged, the power of the first electrical machine output shaft 201 may be transferred to the engine 300 through the first clutch 15, to achieve a technical effect of transferring power from the first electrical machine 200 to the drive member 11 and the engine 300.

In some embodiments, as shown in FIG. 1 and FIG. 2, the second clutch 16 may include a second housing 161 and a second driven member 162. The second housing 161 is fixedly connected to the drive member 11. In an embodiment, the second housing 161 may be fixedly connected to the drive member 11 through a bolt, or the second housing 161 may be welded to the drive member 11, or the second housing 161 may be clamped to the drive member 11, so that the second housing 161 is fixedly connected to the drive member 11. A third friction plate 163 is arranged inside the second housing 161, and the second driven member 162 is configured to be selectively engaged with the third friction plate 163. The second driven member 162 moves relative to the second housing 161, so that the third friction plate 163 and the second driven member 162 are engaged or disconnected. When the third friction plate 163 and the second driven member 162 are engaged, power may be transferred in the second clutch 16. When the third friction plate 163 and the second driven member 162 are disconnected, power cannot be transmitted between the second housing 161 and the second driven member 162, to ensure that the second clutch 16 has a clutch effect. In an embodiment, the second driven member 162 is drivingly connected to the reverse piece 700, so that power is transferred to the reverse piece 700.

In some embodiments of the present disclosure, as shown in FIG. 1, the second driven member 162 is arranged with a fourth friction plate 164, the third friction plate 163 and the fourth friction plate 164 are alternately arranged, and the third friction plate 163 and the fourth friction plate 164 may be selectively engaged, to control engagement or separation of the second housing 161 and the second driven member 162. In an embodiment, multiple third friction plates 163 are arranged, the multiple third friction plates 163 are sequentially spaced apart, a groove is formed between adjacent third friction plates 163, and the second driven member 162 is arranged with at least one fourth friction plate 164. For example, there are multiple fourth friction plates 164, the multiple fourth friction plates 164 are arranged in a one-to-one correspondence with multiple first grooves 1511, and the fourth friction plate 164 extends into a corresponding groove. The second driven member 162 moves relative to the second housing 161, so that the third friction plate 163 and the fourth friction plate 164 are selectively engaged or disconnected, to control engagement or separation of the second housing 161 and the second driven member 162.

In some embodiments of the present disclosure, as shown in FIG. 1 and FIG. 2, the second housing 161 and the drive member 11 are integrally formed. In other words, the second housing 161 and the drive member 11 are configured as an integral member. In such arrangement, connection strength of the second housing 161 and the drive member 11 can be improved, and the second housing 161 and the drive member 11 can be prevented from being separated. In addition, a step of separately producing the second housing 161 can also be omitted, to reduce mold development costs, reduce production costs of the hybrid powertrain 1000, improve production efficiency of the hybrid powertrain 1000, and implement integration of the second clutch and the drive member 11.

In some embodiments of the present disclosure, the reverse piece 700 is drivingly connected to the first drive wheel 2000 through the first differential 600, and the first differential 600 is drivingly connected to the first drive wheel 2000. The second clutch 16 is drivingly connected to the first differential 600 through the reverse piece 700, and the first differential 600 is engaged between the reverse piece 700 and the first drive wheel 2000, so that power is transferred. When the second driven member 162 is engaged with the second housing 161, power of the drive member 11 is transferred to the first drive wheel 2000 through the second clutch 16, the reverse piece 700, and the first differential 600. The power is transferred to the first drive wheel 2000 of the vehicle 4000 through the first differential 600, so that the vehicle 4000 is driven to drive.

In some embodiments of the present disclosure, as shown in FIG. 1 and FIG. 2, an output end of the first differential 600 has a first gear 601, the second clutch 16 is arranged with a first output gear 13, the reverse piece 700 is a reverse gear, and the reverse gear is engaged between the first output gear 13 and the first gear 601. In an embodiment, the second driven member 162 of the second clutch 16 is arranged with the first output gear 13, the first output gear 13 is sleeved outside the second driven member 162, and the first output gear 13 may be integrally formed with the second driven member 162, to reduce mold development costs and reduce production costs. When the second driven member 162 is engaged with the second housing 161, power of the drive member 11 is transferred to the first differential 600 through the second clutch 16, the first output gear 13, the reverse gear 700, and the first gear 601, and power is transferred to the first drive wheel 2000 of the vehicle 4000 through the first differential 600, so that the vehicle 4000 is driven to drive.

In some embodiments of the present disclosure, as shown in FIG. 3, a central axis of the first gear 601, a central axis of the reverse gear 700, and a central axis of the first output gear 13 are parallel, and a projection of the central axis of the first gear 601, a projection of the central axis of the reverse gear, and a projection line of the central axis of the first output gear 13 are connected to form a triangle in an axial direction of the first gear 601. In such arrangement, a structure of the first gear 601, the reverse gear, and the first output gear 13 can be more compact, to reduce a radical size of the hybrid powertrain.

In some embodiments of the present disclosure, the hybrid powertrain 1000 may further include a support shaft 14. The drive member 11 is connected to the support shaft 14, the drive member 11 is coaxially arranged with the support shaft 14, and the second driven member 162 is rotatably sleeved on the support shaft 14. In an embodiment, the drive member 11 may be arranged as a drive gear, the drive member 11 may be sleeved outside the support shaft 14, the drive member 11 is fixedly connected to the support shaft 14, and a central axis of the drive member 11 coincides with a central axis of the support shaft 14. The second driven member 162 is rotatable relative to the support shaft 14. In such arrangement, the second clutch 16 and the drive member 11 can be integrated and arranged on a same support shaft 14, so that the hybrid powertrain 1000 has a compact structure, and a size of the hybrid powertrain 1000 is reduced. The hybrid powertrain 1000 occupies small arrangement space, to help arrange the hybrid powertrain 1000 on the vehicle 4000, and reduce production efficiency of the vehicle 4000.

In some embodiments of the present disclosure, as shown in FIG. 1 and FIG. 2, the hybrid powertrain 1000 may further include a first bearing 142. The second driven member 162 is rotatably connected to the support shaft 14 through the first bearing 142. The first bearing 142 is sleeved outside the support shaft 14, and the first bearing 142 is connected between the second driven member 162 and the support shaft 14, so that the second driven member 162 and the support shaft 14 rotate relative to each other. In addition, the first bearing 142 is supported between the second driven member 162 and the support shaft 14, to ensure that the second driven member 162 and the support shaft 14 rotate around a same axis, ensure that the second driven member 162 and the support shaft 14 smoothly rotate relative to each other, and prevent the second driven member 162 from radially moving relative to the support shaft 14.

In some embodiments of the present disclosure, as shown in FIG. 1 and FIG. 2, the hybrid powertrain 1000 may further include a housing. The support shaft 14 is rotatably connected to the housing through the second bearing 143. In an embodiment, the second bearing 143 is sleeved outside the support shaft 14, the second bearing 143 is connected between the support shaft 14 and the housing, and the support shaft 14 is mounted and fastened through the second bearing 143, so that the support shaft 14 is rotatable relative to the housing. The support shaft 14 can be reliably mounted on the housing of the hybrid powertrain 1000, so that the support shaft 14 can reliably support the second clutch 16, to further ensure working performance of the second clutch 16.

In some embodiments of the present disclosure, as shown in FIG. 1, the first electrical machine output shaft 201 of the first electrical machine 200 is parallel to the engine output shaft 301. In such arrangement, arrangement of the first electrical machine 200 and the engine 300 can be facilitated, to avoid interference between the first electrical machine 200 and the engine 300.

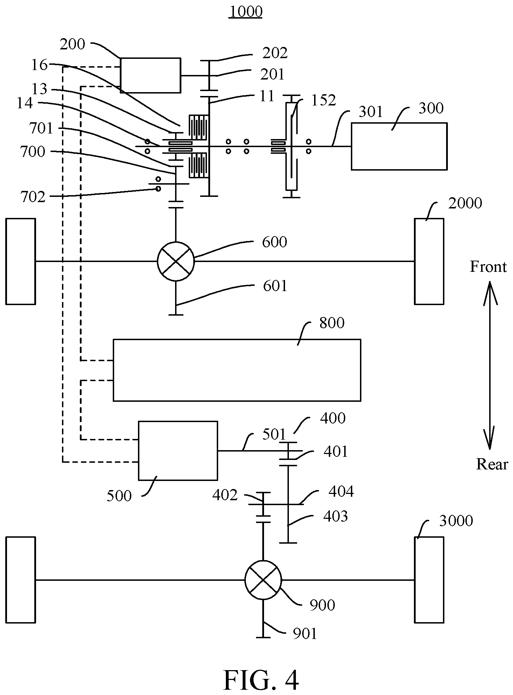

As shown in FIG. 4, in another embodiment, the engine output shaft 301 is coaxially arranged with the support shaft 14, and the first driven member 152 is rotatably connected to the support shaft 14. In this embodiment, the first housing 151 may further be fixedly connected to or integrally formed with the drive member 11, so that the first housing 151, the second housing 61, and the drive member 11 are fixedly connected, or the first housing 151, the second housing 61, and the drive member 11 are integrally formed.

In some embodiments of the present disclosure, as shown in FIG. 1, the hybrid powertrain 1000 may further include a second electrical machine 500 (namely, the second electrical machine 500 in the foregoing embodiments) and a transmission 400. The transmission 400 is connected between the second electrical machine 500 and the second differential 900, and the second electrical machine 500 outputs power to the second drive wheel 3000 through the transmission 400. In an embodiment, as shown in FIG. 1, the transmission 400 includes a transmission input gear 401 and a transmission output gear 402. The transmission input gear 401 and the transmission output gear 402 are drivingly connected, the transmission input gear 401 is fixedly connected to a second electrical machine output shaft 501 of the second electrical machine 500, the second differential 900 has a second gear 901, and the transmission output gear 402 is engaged with the second gear 901 for driving. In an embodiment, the transmission 400 further includes a transmission drive gear 403. The transmission drive gear 403 and the transmission output gear 402 are mounted on a same connecting shaft 404, the transmission drive gear 403 is engaged with the transmission input gear 401, and the transmission output gear 402 is engaged with the second gear 901 for driving.

In some embodiments of the present disclosure, as shown in FIG. 1, the hybrid powertrain 1000 may further include the energy storage unit 800. The energy storage unit 800 is electrically connected to the first electrical machine 200. In an embodiment, the energy storage unit 800 is electrically connected to the second electrical machine 500. The energy storage unit 800 may be a battery pack, and the energy storage unit 800 may supply power to the first electrical machine 200 and the second electrical machine 500, to drive the first electrical machine 200 and the second electrical machine 500 to work. When the second electrical machine 500 works, the second electrical machine output shaft 501 of the second electrical machine 500 drives the transmission input gear 401 to rotate. When the transmission input gear 401 rotates, the transmission drive gear 403 is driven to rotate. The transmission drive gear 403 drives the transmission output gear 402 to rotate. When the transmission output gear 402 rotates, the second gear 901 is driven to rotate, to output power to the second differential 900. The power is output to the second drive wheel 3000 through the second differential 900, so that the second drive wheel 3000 is driven to rotate.

In some embodiments of the present disclosure, in this embodiment, the drive member 11, the first clutch 15, and the second clutch 16 may be integrated and arranged, the drive member 11 is drivingly connected to the first electrical machine 200, and the first clutch 15 and the second clutch 16 are respectively located on two sides of the drive member 11, to reduce a radial size of a conversion apparatus 100. Both the first clutch 15 and the second clutch 16 are connected to the drive member 11, the first clutch 15 includes the first housing 151 and the first driven member 152, the first housing 151 is fixedly connected to the drive member 11, and the first driven member 152 is selectively engaged with the first housing 151. The first driven member 152 moves relative to the first housing 151, so that the first housing 151 and the first driven member 152 are engaged or disconnected. The first driven member 152 is fixedly connected to the engine output shaft 301, the second clutch 16 includes the second housing 161 and the second driven member 162, the second housing 161 is fixedly connected to the drive member 11, the second housing 161 is selectively engaged with the second driven member 162, and the first housing 151, the second housing 161, and the drive member 11 are integrally formed. The drive member 11 is connected to the support shaft 14, the first driven member 152 and the second driven member 162 are rotatably sleeved on the support shaft 14, and the first driven member 152 and the second driven member 162 are rotatable relative to the support shaft 14.

The hybrid powertrain 1000 is mounted on the vehicle 4000, to implement multiple functions of the vehicle 4000. Details are as follows:

Function of starting the engine 300 when the first electrical machine 200 is in a no-load state: In such a function state, the second driven member 162 is disconnected from the second housing 161, and the first electrical machine 200 is in a still state. The energy storage unit 800 starts to supply power to the first electrical machine 200, the first electrical machine 200 starts to run from the still state, the first driven member 152 is engaged with the first housing 151, and power is transferred to the engine 300 through the intermediate gear 202, the first housing 151, and the first driven member 152, to drag the engine 300 to start ignition.

Function of starting the engine 300 when the first electrical machine 200 is in a loading state: In such a function state, the second housing 161 is engaged with the second driven member 162, the energy storage unit 800 supplies power to the first electrical machine 200, and the first electrical machine 200 is in a running with load state. The first driven member 152 starts to be engaged with the first housing 151 through sliding friction, and power is transferred to the engine 300 through the first clutch 15, to drag the engine 300 to start ignition.

Series power generation function of the engine 300: In such a function state, the engine 300 has been in an ignited, running, and working state, and the second driven member 162 is disconnected from the second housing 161. The first housing 151 starts to be engaged with the first driven member 152, the engine 300 transfers power to the first electrical machine 200 through the first driven member 152, the first housing 151, and the intermediate gear 202, and the first electrical machine 200 runs to generate power and supply electrical energy to the energy storage unit 800 and/or the second electrical machine 500.

Parallel power generation function of the engine 300: In such a function state, the engine 300 is in an ignited, running, and working state, the first housing 151 is engaged with the first driven member 152, the second driven member 162 is engaged with the second housing 161, the engine 300 drives the vehicle 4000 to run and drags the first electrical machine 200 to rotate, the first electrical machine 200 changes into a generator mode, and the engine 300 drives the first electrical machine 200 to generate power and supply electrical energy to the energy storage unit 800 and/or the second electrical machine 500.

Function of recovering braking energy by the second electrical machine 500 during driving: In such a function state, the second driven member 162 is disconnected from the second housing 161, and the first driven member 152 is disconnected from the first housing 151. The vehicle 4000 transfers power to the second electrical machine 500 through a rear axle wheel (namely, a rear drive shaft), the second differential 900, and the transmission 400. The second electrical machine 500 generates power and supplies power to the energy storage unit 800 and/or the first electrical machine 200. The function is applicable to small and medium braking conditions.

Function of jointly recovering braking energy by the first electrical machine 200 and the second electrical machine 500 during driving: In such a function state, the second driven member 162 is engaged with the second housing 161, and the first driven member 152 is disconnected from the first housing 151. The vehicle 4000 transfers power to the second electrical machine 500 through a rear axle wheel (namely, a rear drive shaft), the second differential 900, and the transmission 400, and also transfers power to the first electrical machine 200 through a front axle wheel (namely, a front drive shaft), the first differential 600, the second clutch 16, the drive member 11, and the intermediate gear 202. The first electrical machine 200 and the second electrical machine 500 run together to generate power and supply electrical energy to the energy storage unit 800. The function is applicable to medium and large braking conditions.

After the hybrid powertrain 1000 is mounted on the vehicle 4000, multiple driven driving modes of the vehicle 4000 may be implemented. Specific implementation is as follows:

EV front-wheel drive mode: In the mode, the second driven member 162 is engaged with the second housing 161, and the first driven member 152 is disconnected from the first housing 151. The energy storage unit 800 supplies power to the first electrical machine 200, and the first electrical machine 200 runs and transfers power to the first drive wheel 2000 through the intermediate gear 202, the drive member 11, the second housing 161, the second driven member 162, the first output gear 13, the reverse piece 700, the first gear 601, the first differential 600, and a front drive shaft, to drag the entire vehicle to run.

EV rear-wheel drive mode: In the mode, the second driven member 162 is disconnected from the second housing 161, and the first driven member 152 is disconnected from the first housing 151. The energy storage unit 800 supplies power to the second electrical machine 500, and the second electrical machine 500 runs and transfers power to the second drive wheel 3000 through the transmission 400, the second gear 901, the second differential 900, and a rear drive shaft, to drag the entire vehicle to run.

EV four-wheel drive mode: In the mode, the second driven member 162 is engaged with the second housing 161, and the first driven member 152 is disconnected from the first housing 151. The energy storage unit 800 supplies power to the first electrical machine 200, and the first electrical machine 200 runs and transfers power to the first drive wheel 2000 through the intermediate gear 202, the drive member 11, the second housing 161, the second driven member 162, the first output gear 13, the reverse piece 700, the first gear 601, the first differential 600, and a front drive shaft. The energy storage unit 800 also supplies power to the second electrical machine 500, and the second electrical machine 500 runs and transfers power to the second drive wheel 3000 through the transmission 400, the second differential 900, and a rear drive shaft. The first electrical machine 200 and the second electrical machine 500 work together to drag the entire vehicle.

HEV front-wheel drive mode: In the mode, the engine 300 is in an ignited, running, and working state, the second driven member 162 is engaged with the second housing 161, and the first driven member 152 is engaged with the first housing 151. The engine 300 transfers power to the first drive wheel 2000 through the first driven member 152, the first housing 151, the intermediate gear 202, the drive member 11, the second clutch 16, the first output gear 13, the reverse piece 700, the first gear 601, the first differential 600, and a front drive shaft, to drag the entire vehicle to run. When power is insufficient, the energy storage unit 800 supplies power to the first electrical machine 200, to help the engine 300 to drive the entire vehicle to run. When power is surplus, the first electrical machine 200 generates power and supplies electrical energy to the energy storage unit 800.

HEV rear-wheel drive mode: In the mode, the engine 300 is in an ignited, running, and working state, the second driven member 162 is disconnected from the second housing 161, and the first driven member 152 is engaged with the first housing 151. The engine 300 transfers power to the first electrical machine 200 through the first driven member 152, the first housing 151, and the intermediate gear 202, and the first electrical machine 200 runs to generate power and supply electrical energy to the second electrical machine 500. The second electrical machine 500 runs and transfers power to the second drive wheel 3000 through the transmission 400, the second differential 900, and a rear drive shaft, to drag the entire vehicle to run. When power is insufficient, the energy storage unit 800 supplies power to the second electrical machine 500, to help drive the entire vehicle. When power is surplus, the first electrical machine 200 supplies extra electrical energy to the energy storage unit 800.

HEV four-wheel drive mode: In the mode, the engine 300 is in an ignited, running, and working state, the second driven member 162 is engaged with the second housing 161, and the first driven member 152 is engaged with the first housing 151. The first electrical machine 200 transfers power to the first drive wheel 2000 through the intermediate gear 202, the drive member 11, the second clutch 16, the first output gear 13, the reverse piece 700, the first gear 601, the first differential 600, and a front drive shaft, to drag the entire vehicle to run. In addition, the energy storage unit 800 supplies power to the second electrical machine 500, and the second electrical machine 500 runs and transfers power to the second drive wheel 3000 through the transmission 400, the second differential 900, and a rear drive shaft, to drag the entire vehicle together to run. When power is insufficient, the energy storage unit 800 supplies power to the first electrical machine 200, to help drive the entire vehicle to run. When power is surplus, the first electrical machine 200 generates power and supplies electrical energy to the energy storage unit 800.

It should be noted that data parameters such as a type of the engine 300 (for example, a naturally aspirated engine or a turbocharged engine), a performance parameter (for example, displacement, power, or torque) of the engine 300, and a size parameter of the engine 300 are properly selected based on an actual situation. A type, a performance parameter, a size parameter, and the like of the first electrical machine 200 and the second electrical machine 500 may be properly selected based on an actual situation.

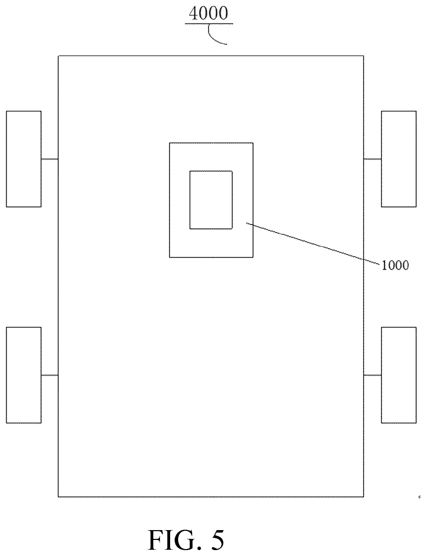

As shown in FIG. 5, a vehicle 4000 in an embodiment of the present disclosure includes the hybrid powertrain 1000 in the foregoing embodiments. The hybrid powertrain 1000 has a simple structure, and is easy to be arranged and mounted. Therefore, production efficiency of the vehicle 4000 can be improved. In addition, when an engine 300 is arranged on a right side of a first clutch 15 and a second clutch 16, reversing is performed by a reverse piece 700, so that a rotation direction of an engine output shaft 301 is the same as a rotation direction of a first drive wheel 2000, to implement driving of the vehicle 4000 to drive forward and ensure that the vehicle 4000 normally drives.

In the description of this specification, descriptions of reference terms "an embodiment", "some embodiments", "an example embodiment", "an example", "a specific example", or "some examples" mean that specific features, structures, materials, or features described with reference to the embodiment or example are included in at least one embodiment or example of the present disclosure. In this specification, example descriptions of the foregoing terms do not necessarily indicate the same embodiment or example. In addition, the described specific features, structures, materials, or features may be combined in a proper manner in any one or more embodiments or examples.

Although the embodiments of the present disclosure are shown and described, a person of ordinary skill in the art should understand that various changes, modifications, replacements, and variations may be made to the embodiments without departing from the principles and spirit of the present disclosure, and the scope of the present disclosure is defined by the claims and equivalents thereof.

## Claims

1. A hybrid powertrain (1000), comprising:
a drive member (11), a first clutch (15), a second clutch (16), a first electrical machine (200), an engine (300), and a reverse piece (700);
the first clutch (15) being drivingly connected to both an engine output shaft (301) of the engine (300) and the drive member (11), to selectively connect the drive member (11) and the engine output shaft (301);
the second clutch (16) being connected between the drive member (11) and the reverse piece (700), and the reverse piece (700) being connected between the second clutch (16) and a first drive wheel (2000), to selectively connect the drive member (11) and the first drive wheel (2000);
the first electrical machine (200) being drivingly connected to the drive member (11), so that the first electrical machine (200) and the engine (300) are configured to be selectively connected through the first clutch (15); and
when the engine (300) outputs power to the first drive wheel (2000), reversing being performed by the reverse piece (700), so that a rotation direction of the engine output shaft (301) is the same as a rotation direction of the first drive wheel (2000).

2. The hybrid powertrain (1000) according to claim 1, wherein the first clutch (15) comprises a first housing (151) and a first driven member (152), a first clutch plate is arranged inside the first housing (151), the first clutch plate is selectively engaged with the first driven member (152), the first driven member (152) is connected to the engine output shaft (301), and the first housing (151) is connected to the drive member (11).

3. The hybrid powertrain (1000) according to claim 2, wherein an intermediate gear (202) is engaged between the first housing (151) and the drive member (11).

4. The hybrid powertrain (1000) according to claim 3, wherein a first electrical machine output shaft (201) of the first electrical machine (200) is fixedly connected to the intermediate gear (202), and the first electrical machine output shaft (201) is coaxially arranged with the intermediate gear (202).

5. The hybrid powertrain (1000) according to any one of claims 2 to 4, wherein the second clutch (16) comprises a second housing (161) and a second driven member (162), a second clutch plate is arranged inside the second housing (161), the second clutch plate is fixedly connected to the drive member (11), the second driven member (162) is configured to be selectively engaged with the second housing (161), and the second driven member (162) is drivingly connected to the reverse piece (700).

6. The hybrid powertrain (1000) according to claim 5, wherein the reverse piece (700) is drivingly connected to the first drive wheel (2000) through a first differential (600).

7. The hybrid powertrain (1000) according to claim 6, wherein an output end of the first differential (600) has a first gear (601), the second clutch (16) is arranged with a first output gear (13), the reverse piece (700) is a reverse gear, and the reverse gear is engaged between the first output gear (13) and the first gear (601).

8. The hybrid powertrain (1000) according to claim 7, wherein a central axis of the first gear (601), a central axis of the reverse gear (700), and a central axis of the first output gear (13) are parallel, and a projection of the central axis of the first gear (601), a projection of the central axis of the reverse gear (700), and a projection line of the central axis of the first output gear (13) are connected to form a triangle in an axial direction of the first gear (601).

9. The hybrid powertrain (1000) according to claim 5, wherein the second housing (161) and the drive member (11) are integrally formed.

10. The hybrid powertrain (1000) according to any one of claims 5 to 9, further comprising a support shaft (14), the drive member (11) being connected to the support shaft (14) and being coaxially arranged with the support shaft (14), and the second driven member (162) being rotatably sleeved on the support shaft (14).

11. The hybrid powertrain (1000) according to claim 10, wherein the engine output shaft (301) is coaxially arranged with the support shaft (14), and the first driven member (152) is connected to the support shaft (14).

12. The hybrid powertrain (1000) according to claim 11, wherein the first housing and the drive member are fixedly connected or integrally formed.

13. The hybrid powertrain (1000) according to any one of claims 1 to 12, further comprising: an energy storage unit (800), the energy storage unit (800) being electrically connected to the first electrical machine (200).

14. The hybrid powertrain (1000) according to any one of claims 1 to 13, further comprising:
a second electrical machine (500); and
a transmission (400), the transmission (400) being connected between the second electrical machine (500) and a second differential (900), and the second electrical machine (500) outputting power to a second drive wheel (3000) through the transmission (400).

15. A vehicle (4000), comprising the hybrid powertrain (1000) according to any of claims 1 to 14.
